# EUROPEAN PATENT SPECIFICATION

(11) **EP 2 650 204 B1**
(45) Date of publication and mention of the grant of the patent: **07.12.2016**
(21) Application number: 11846604.4
(22) Date of filing: 24.10.2011
(51) Int. Cl.: B62M 6/65, B62M 11/16

(54) **ELECTRIC HUB DEVICE AND ELECTRIC BICYCLE**
ELEKTRISCHE NABENVORRICHTUNG UND ELEKTROFAHRRAD
DISPOSITIF À MOYEU ÉLECTRIQUE ET VÉLO ÉLECTRIQUE

(30) Priority: 06.12.2010 JP 2010270995
(43) Date of publication of application: 16.10.2013
(73) Proprietor: Panasonic Corporation, Osaka 571-8501 (JP)
(72) Inventor: MIYOSHI, Takehiro, Osaka 540-6207 (JP)
(74) Representative: Grünecker Patent- und Rechtsanwälte PartG mbB
(86) International application number: PCT/JP2011/005920
(87) International publication number: WO 2012/077272

(56) References cited:
- WO-A1-2010/092345
- CN-Y- 201 051 699
- JP-A- 2002 142 403
- JP-A- 2005 335 535
- JP-A- 2005 335 536
- JP-A- 2009 090 982
- US-B1- 6 278 216

## Description

### Technical Field

The present invention relates to an electric hub device and an electric bicycle provided with the electric hub device.

### Background Art

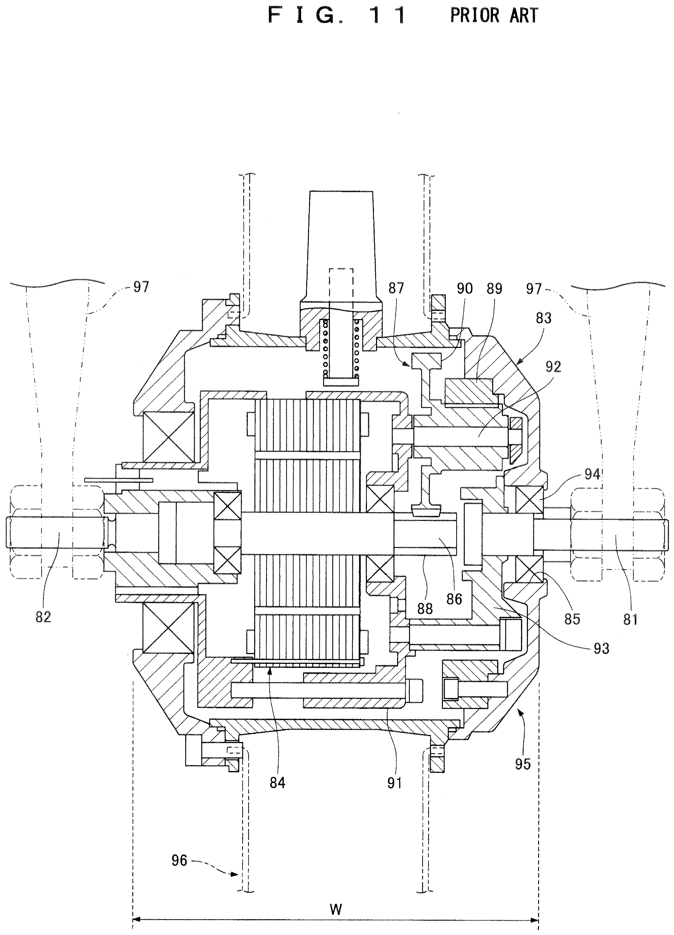

For example, a conventional electric hub device provided on the front wheel of an electric bicycle includes, as illustrated in FIG. 11, a pair of hub shafts 81 and 82 laterally provided for fixation, a hub body 83 rotatable with respect to the hub shafts 81 and 82, and a motor 84 for rotating the hub body 83.

The hub shaft 81 is inserted into a through hole 85 formed on the hub body 83 and penetrates the hub body 83 from the exterior. The motor 84 is provided in the hub body 83 and includes a rotating shaft 86 operating with the hub body 83 in an interlocked manner via a deceleration mechanism 87 provided in the hub body 83. The deceleration mechanism 87 includes a sun gear 88 formed on the rotating shaft 86, an annular gear 89 formed in the hub body 83, and a plurality of planetary gears 90 engaged with the sun gear 88 and the annular gear 89.

A housing 91 of the motor 84 includes a plurality of spindles 92 and a support frame 93 supporting the ends of the spindles 92. The planetary gear 90 is rotatably supported by the spindle 92. Moreover, a bearing 94 rotatably supporting the hub body 83 is provided between the hub shaft 81 and the hub body 83. The bearing 94 is fit onto the hub shaft 81 and is fit into the through hole 85 of the hub body 83.

An electric hub device 95 configured thus is provided on a front wheel 96 such that the hub shafts 81 and 82 are connected to the ends of a front fork 97.

With this configuration, the motor 84 starts to rotate the rotating shaft 86. This rotates the sun gear 88, the planetary gears 90 about the spindles 92, the annular gear 89 in response to the rotations of the planetary gears 90, and the hub body 83 about the axes of the hub shafts 81 and 82 while decelerating the hub body 83 together with the annular gear 89. Thus, the front wheel 96 is rotated by the auxiliary power of the motor 84.

The electric hub device 95 configured thus is described in, for example, Patent Literature 1 and Patent Literature 2 below.

### Citation List

### Patent Literature

Patent Literature 1: Japanese Patent Laid-Open No. 2006-96059
Patent Literature 2: Japanese Patent Laid-Open No. 2009-12542

r The closest prior art document JP2002142403, discloses an electric hub device in accordance with the preamble of claim 1.

### Summary of Invention

### Technical Problem

In the conventional design, unfortunately, it is difficult to reduce a width W of the hub body 83 as illustrated in FIG. 11.

An object of the present invention is to provide an electric hub device including a hub body that can be reduced in width, and an electric bicycle.

### Solution to Problem

In order to attain the object, an electric hub device according to a first invention includes hub shafts for fixation, a hub body rotatable with respect to the hub shafts, and a motor for rotating the hub body, wherein the hub shaft is inserted into a through hole formed on the hub body and penetrates the hub body from the exterior of the hub body, the motor is provided in the hub body, the motor includes a rotating shaft that operates with the hub body in an interlocked manner via a deceleration mechanism provided in the hub body, the deceleration mechanism includes a sun gear formed on the rotating shaft, an annular gear provided in the hub body, and rotatable planetary gears engaged with the sun gear and the annular gear, the planetary gear is supported by a support member provided on the motor, the support member includes a recess opposed to the through hole in the axial direction of the hub shaft, and the support member includes a bearing member fit into the recess of the support member, the bearing member rotatably receiving the hub body.

With this configuration, the motor starts to rotate the rotating shaft. This rotates the sun gear, the planetary gears, the annular gear in response to the rotations of the planetary gears, and the hub body about the axes of the hub shafts while decelerating the hub body together with the annular gear. At this point, the hub body is rotatably supported by the support member via the bearing member. Moreover, the bearing member fit into the recess of the support member reduces the width of the hub body.

An electric hub device according to a second invention includes hub shafts for fixation, a hub body rotatable with respect to the hub shafts, and a motor for rotating the hub body, wherein the hub shaft is inserted into a through hole formed on the hub body and penetrates the hub body from the exterior of the hub body, the motor is provided in the hub body, the motor includes a rotating shaft that operates with the hub body in an interlocked manner via a deceleration mechanism provided in the hub body, the deceleration mechanism includes a sun gear formed on the rotating shaft, an annular gear provided in the hub body, and rotatable planetary gears engaged with the sun gear and the annular gear, the planetary gear is supported by a support member provided on the motor, the support member includes a recess opposed to the through hole in the axial direction of the hub shaft, and the support member includes a bearing member that is fit into the recess of the support member while being fit into the through hole of the hub body and onto the hub shaft, the bearing member rotatably receiving the hub body.

With this configuration, the hub body is rotatably received by the hub shaft via the bearing member, and the bearing member is fit into the recess of the support member, thereby reducing the width of the hub body.

In an electric hub device according to a third invention, the bearing member is fit into the recess of the support member without being placed out of the recess.

A fourth invention is an electric bicycle including the electric hub device according to any one of the first to third inventions,the electric hub device being provided on a wheel.

With this configuration, the motor starts to rotate the hub body, rotating the wheel by the auxiliary power of the motor.

### Advantageous Effects of Invention

As has been discussed, the present invention can achieve a small and lightweight electric hub device by reducing the width of the hub body.

### Brief Description of Drawings

[FIG. 1] FIG. 1 is a side view illustrating an electric bicycle according to a first embodiment of the present invention.
[FIG. 2] FIG. 2 is a side view of an electric hub device provided on the electric bicycle according to the first embodiment.
[FIG. 3] FIG. 3 is a cross-sectional view of the electric hub device according to the first embodiment.
[FIG. 4] FIG. 4 is a partial enlarged cross-sectional view of the electric hub device according to the first embodiment.
[FIG. 5] FIG. 5 illustrates a deceleration mechanism and a support frame in the electric hub device viewed in an axial direction according to the first embodiment.
[FIG. 6] FIG. 6 illustrates the support frame in the electric hub device viewed in the axial direction according to the first embodiment.
[FIG. 7] FIG. 7 is a cross-sectional view taken along the arrows X-X of FIG. 6.
[FIG. 8] FIG. 8 is a cross-sectional view taken along the arrows Y-Y of FIG. 6.
[FIG. 9] FIG. 9 is a cross-sectional view illustrating an electric hub device according to a second embodiment of the present invention.
[FIG. 10] FIG. 10 is a partial enlarged cross-sectional view of the electric hub device.
[FIG. 11] FIG. 11 is a cross-sectional view of an electric hub device provided on a conventional electric bicycle.

### Description of Embodiments

Embodiments of the present invention will be described below with reference to the accompanying drawings.

### (First Embodiment)

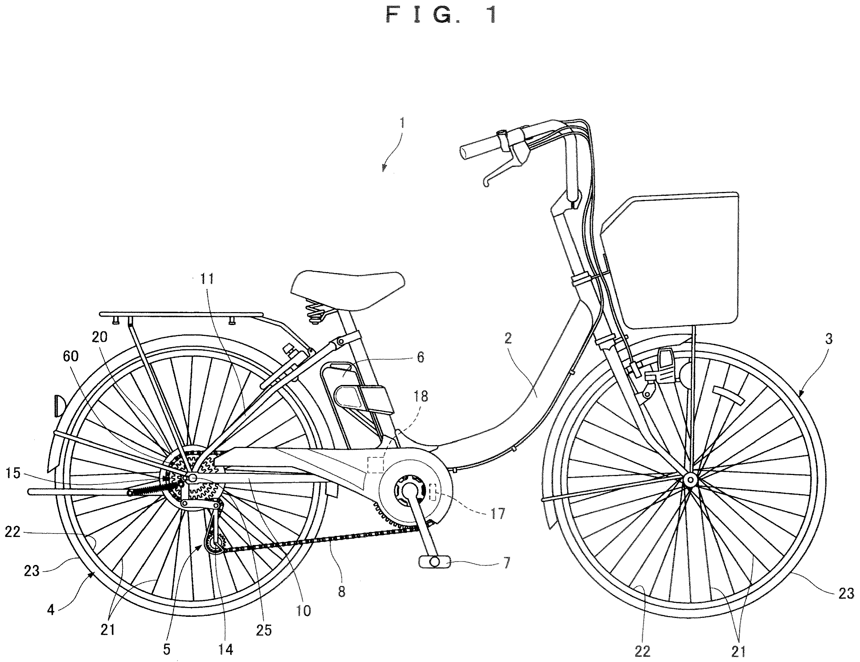

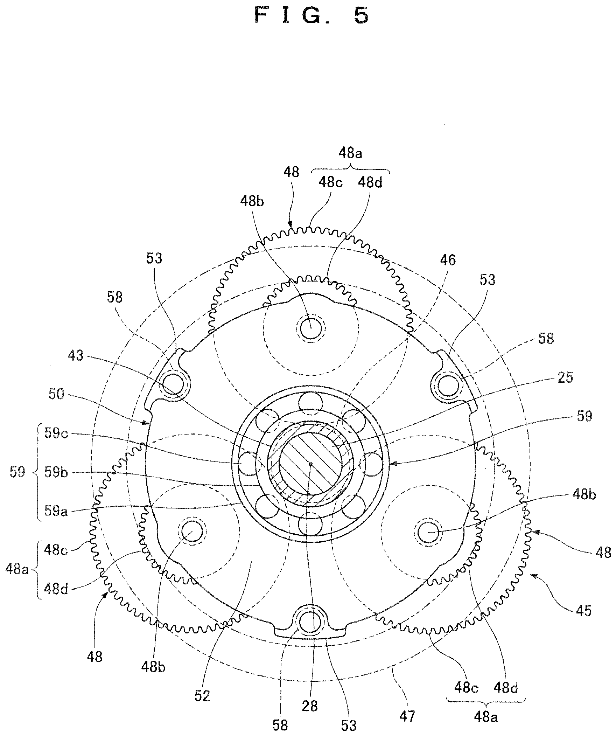

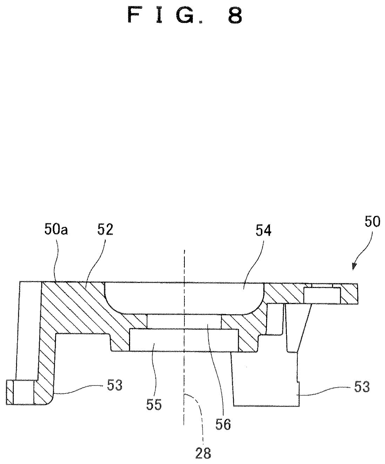

Referring to FIGS. 1 to 8, a first embodiment will be first described below.

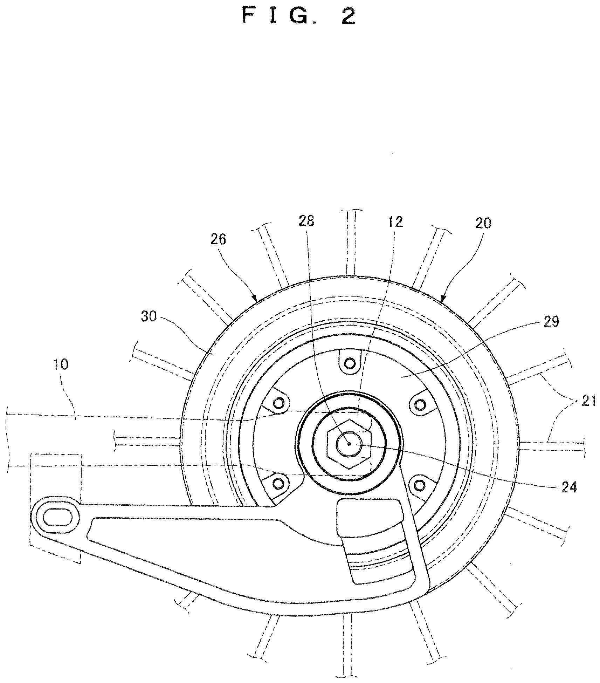

As illustrated in FIG. 1, reference numeral 1 denotes an electric bicycle including a frame 2, front and rear wheels 3 and 4 provided on the frame 2, pedals 7, a chain 8, and an external derailleur 5. The frame 2 includes a chain stay 10 and a rear fork 11. The rear end of the chain stay 10 has a rear claw 12 (see FIG. 2) with a groove. The external derailleur 5 includes a rear derailleur 14 and a multi-level freewheel 15. The rear wheel 4 includes an electric hub device 20, a plurality of spokes 21, a rim 22, and a tire 23.

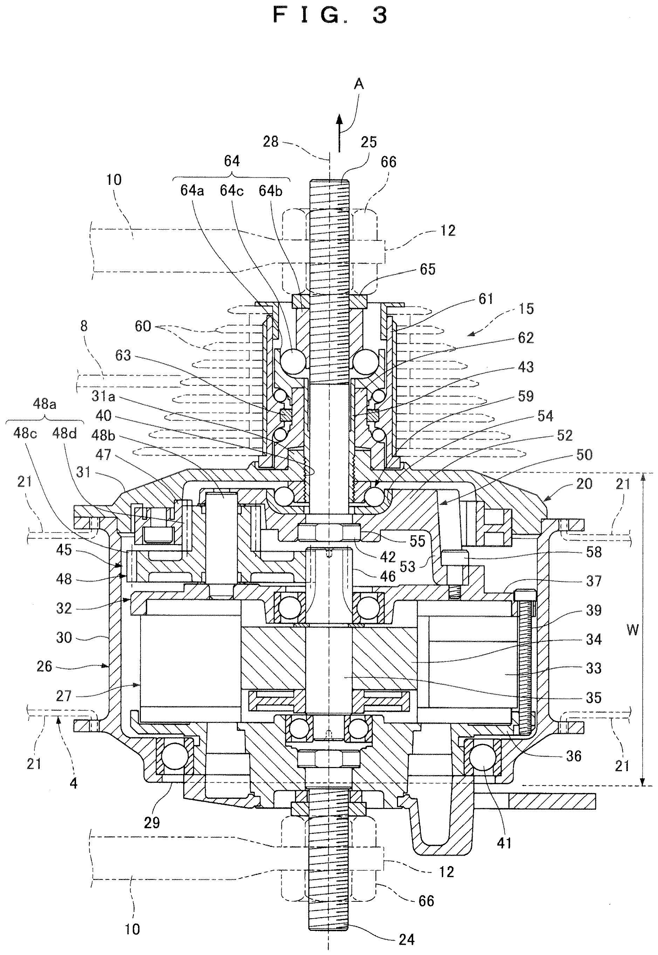

As shown in FIGS. 2 and 3, the electric hub device 20 includes a pair of hub shafts 24 and 25 laterally provided for fixation, a hub body 26 rotatable with respect to the hub shafts 24 and 25, and a mold motor 27 for rotating the hub body 26.

The hub body 26 includes a cylindrical body member 30 having an opening 29 on one end of the body member 30 in the direction of an axis 28 of the hub shafts 24 and 25, a disc-shaped cover member 31 that closes another end of the body member 30, a through hole 40 formed at the center of the cover member 31, and a cylindrical fitting 43 inserted into the through hole 40. The direction of the axis 28 is the width direction of the electric bicycle 1.

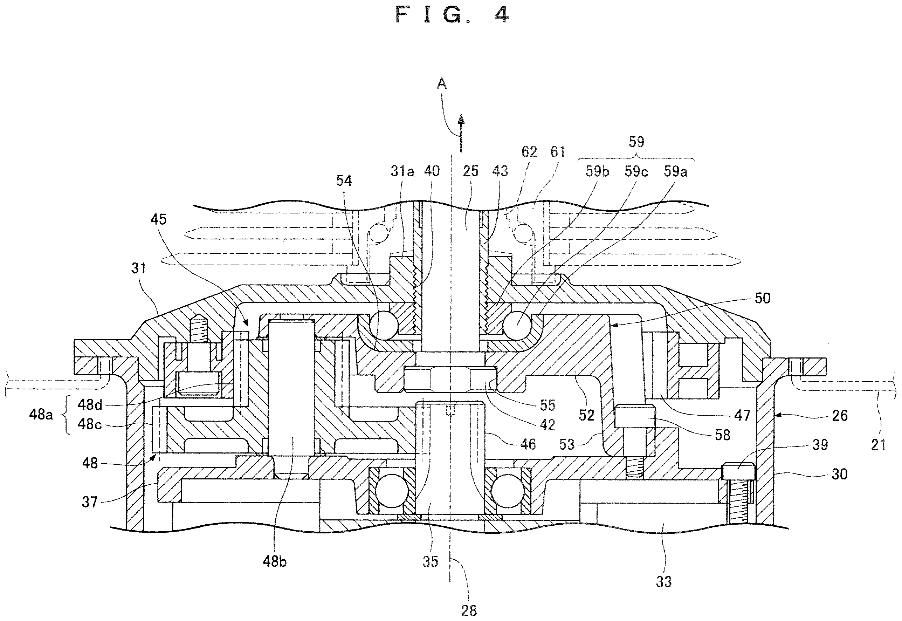

As shown in FIGS. 3 and 4, the cover member 31 has a boss 31a protruding outward. The through hole 40 is formed on the boss 31a. The outer periphery of the fitting 43 has one end shaped like a circle and another end shaped like a hexagon. An external thread is formed on the outer surface of the one end of the fitting 43 while an internal thread is formed on the inner surface of the through hole 40. The external thread is screwed to the internal thread to integrally connect the fitting 43 to the cover member 31.

The mold motor 27 is a brushless motor disposed in the hub body 26. The mold motor 27 includes a motor housing 32, a stator 33 that is covered with resin and is fixed in the motor housing 32, a rotor 34 rotatably provided in the motor housing 32, and a rotating shaft 35 inserted into the rotor 34.

The rotating shaft 35 is located between the hub shafts 24 and 25. The shafts 24, 25, and 35 are located on the same axis 28.

The motor housing 32 includes a housing body 36 and a housing body 37 that are divided in the direction of the axis 28 of the rotating shaft 35. The stator 33 is disposed between the housing bodies 36 and 37 that are connected to each other with a plurality of screws 39.

One end of the body member 30 of the hub body 26 is rotatably supported by the housing body 36 via a bearing 41. The hub shaft 24 is fixed on the housing body 36 while the hub shaft 25 is inserted into the fitting 43 and penetrates the hub body 26 from the exterior. Further, the hub shaft 25 has an engaging portion 42 on one end of the hub shaft 25, the engaging portion 42 protruding outward in a radial direction.

As shown in FIGS. 3 to 5, the rotating shaft 35 of the mold motor 27 operates with the hub body 26 in an interlocked manner via a deceleration mechanism 45 provided in the hub body 26. The deceleration mechanism 45 includes a sun gear 46 formed on the end of the rotating shaft 35, an annular internal gear 47 (an example of an annular gear) attached to the interior of the cover member 31, and a plurality of planetary gears 48 rotatably engaged with the sun gear 46 and the internal gear 47.

One end of the planetary gear 48 is supported by the housing body 37 of the mold motor 27 in the direction of the axis 28 while another end of the planetary gear 48 is supported by a support frame 50 (an example of a support member) provided on the housing body 37.

The planetary gear 48 includes a gear body 48a and a spindle 48b inserted into the gear body 48a. The gear body 48a is rotatably supported by the spindle 48b and includes a gear wheel 48c engaged with the sun gear 46 and a pinion 48d engaged with the internal gear 47. One end of the spindle 48b is supported by the housing body 37 while another end of the spindle 48b is supported by the support frame 50.

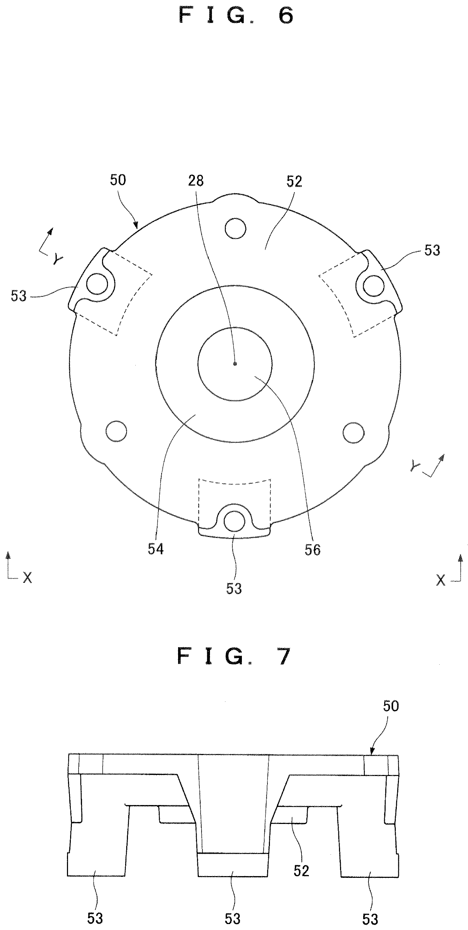

As illustrated in FIGS. 6 to 8, the support frame 50 includes a cylindrical boss 52 and a plurality of legs 53 provided around the boss 52. The boss 52 includes a bearing retaining recess 54, an engaging recess 55, and a communicating hole 56. The bearing retaining recess 54 is formed on a surface facing the through hole 40 of the cover member 31 in the direction of the axis 28 of the hub shafts 24 and 25. The engaging recess 55 is formed on the opposite surface from the bearing retaining recess 54 in the direction of the axis 28. The bearing retaining recess 54 and the engaging recess 55 communicate with each other through the communicating hole 56. As illustrated in FIG. 4, the one end of the hub shaft 25 is inserted into the boss 52. The engaging portion 42 is fit into the engaging recess 55 and is engaged with the boss 52 in a drawing direction A of the hub shaft 25. The ends of the legs 53 are connected and fixed to the housing body 37 with screws 58.

As illustrated in FIGS. 3 to 5 and 8, a bearing member 59 rotatably receiving the fitting 43 of the hub body 26 is fit into the bearing retaining recess 54. The bearing member 59 is a cup-and-cone ball bearing having a plurality of rolling balls 59c between a cup-shaped ball receiver 59a (outer ring) and a cone-shaped (conical) ball press 59b (inner ring), the rolling balls 59c reducing rolling friction. The ball receiver 59a is fit into the bearing retaining recess 54. The ball press 59b is fit onto the one end of the fitting 43 so as to be screwed onto the external thread, and thus the ball press 59b is integrally connected to the fitting 43.

As illustrated in FIG. 3, the freewheel 15 outside the hub body 26 is rotatably fit onto the hub shaft 25. The freewheel 15 includes a cylindrical outer body 61 having a plurality of sprockets 60, a cylindrical inner body 62 provided inside the outer body 61, and a one-way clutch 63 that is provided between the outer body 61 and the inner body 62 so as to transmit a rotating force from the sprockets 60 only to the hub body 26. The cylindrical inner body 62 has a circular outer surface and a hexagonal inner surface. The inner body 62 is fit onto the other end, that is, the hexagonal portion of the fitting 43. Thus, the inner body 62 and the fitting 43 are engaged with each other in a circumferential direction (rotation direction). The boss 31a of the cover member 31 is fit into one end of the inner body 62.

The outer body 61 contains a bearing body 64. The bearing body 64 includes a ball receiver 64a fit between the inner surface of the outer body 61 and the outer surface of the other end of the fitting 43, a ball press 64b fit onto the hub shaft 25, and a plurality of balls 64c provided between the ball receiver 64a and the ball press 64b. The outer surface of the hub shaft 25 has an external screw while the inner surface of the ball press 64b has an internal screw. The ball press 64b is screwed onto the hub shaft 25. Furthermore, a locknut 65 for locking the ball press 64b is screwed onto the hub shaft 25.

The outer surface of the hub body 26 is connected to the ends of the spokes 21 of the rear wheel 4. The hub shafts 24 and 25 are inserted into the respective grooves of the rear claws 12 of the chain stays 10. A nut 66 is screwed to each of the hub shafts 24 and 25 to attach the rear wheel 4 between the chain stays 10 along with the electric hub device 20.

As illustrated in FIG. 1, the electric bicycle 1 includes a battery 6 that supplies power to the mold motor 27, a detector 17 that detects a pedal force applied to the pedals 7, and a controller 18 that controls the driving of the mold motor 27 according to a pedal force detected by the detector 17.

The action of the configuration will be described below.

When the freewheel 15 is attached to the electric hub device 20, as shown in FIG. 3, the ball press 64b is fastened to press the balls 64c, the ball receiver 64a, and the inner body 62 to the cover member 31 of the hub body 26. A thrust load generated at this point is received by the bearing member 59. The bearing member 59 is a cup-and-cone ball bearing and thus can sufficiently receive the thrust load.

When a user rides the electric bicycle 1, a pedal force applied to the pedals 7 is detected by the detector 17 and is transmitted to the freewheel 15 via the chain 8 to rotate the freewheel 15. The rotation of the freewheel 15 is transmitted from the outer body 61 to the inner body 62 through the one-way clutch 63. This allows the inner body 62, the fitting 43, the cover member 31, and the body member 30 to rotate together and the hub body 26 to rotate about the axis 28.

The controller 9 controls the driving of the mold motor 27 according to a pedal force detected by the detector 17. At this point, the rotating shaft 35 rotates with the rotor 34. This rotates the sun gear 46 of the rotating shaft 35, the planetary gears 48, the internal gear 47 in response to the rotations of the planetary gears 48, and the hub body 26 with the internal gear 47 about the axis 28 while decelerating the hub body 26.

Thus, the rear wheel 4 is rotated by a pedal force applied to the pedals 7 and a rotating force (auxiliary power) outputted from the mold motor 27 according to the pedal force. At this point, the ball press 59b of the bearing member 59 rotates with the hub body 26, the ball receiver 59a fixed to the support frame 50 does not rotate, and the hub body 26 is received by the support frame 50 so as to rotate via the bearing member 59.

When the user rides the electric bicycle 1 downhill without pressing the pedals 7, the hub body 26 and the inner body 62 rotate with the rear wheel 4. Since a rotation transmission path from the inner body 62 to the outer body 61 is interrupted by the one-way clutch 63, the rotation of the inner body 62 is not transmitted to the outer body 61.

As illustrated in FIGS. 3, 4, and 8, the bearing member 59 fit into the bearing retaining recess 54 of the support frame 50 reduces a width W of the hub body 26 in the direction of the axis 28, thereby reducing the size and weight of the electric hub device 20.

### (Second Embodiment)

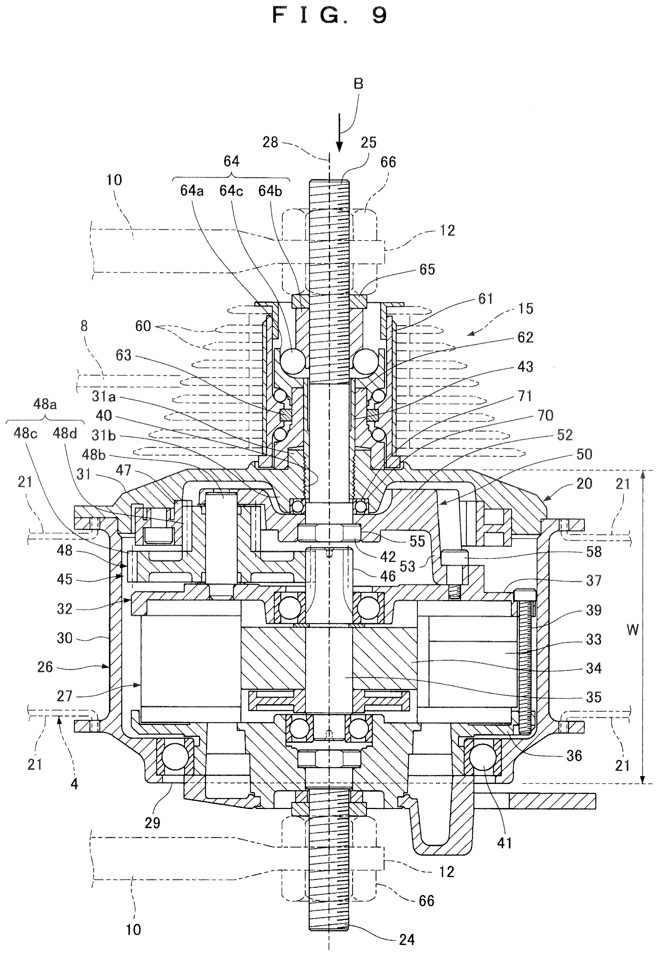

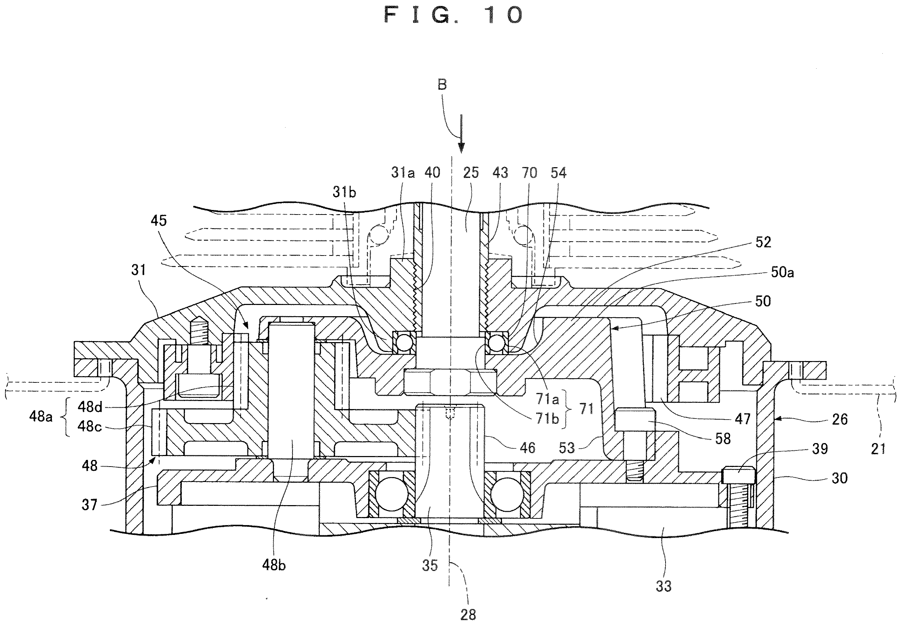

Referring to FIGS. 9 and 10, a second embodiment will be described below. The same members as in the first embodiment are indicated by the same reference numerals and will not be described further herein.

A cover member 31 has a boss 31b that protrudes inward. The boss 31b has a bearing fitting portion 70. The bearing fitting portion 70 is larger in diameter than one end of a through hole 40. A bearing member 71 rotatably receiving the cover member 31 of a hub body 26 is fit into the bearing fitting portion 70. The bearing member 71 is a radial ball bearing that includes an outer ring 71a fit into the bearing fitting portion 70 and an inner ring 71b fit onto a hub shaft 25.

The bearing member 71 is fit into a bearing retaining recess 54 of a support frame 50 together with the inner end of the boss 31b and is not placed out of the bearing retaining recess 54. The bearing member 71 is inserted in a direction B of the hub shaft 25 so as to be deeper than an end face 50a of the support frame 50 facing the cover member 31 in the direction of an axis 28.

The action of the configuration will be described below.

When a user rides an electric bicycle 1, a rear wheel 4 is rotated by a pedal force applied to pedals 7 and a rotating force (auxiliary power) outputted from a mold motor 27 according to the pedal force. At this point, the outer ring 71a of the bearing member 71 rotates with the hub body 26, the inner ring 71b fixed to the hub shaft 25 does not rotate, and the hub body 26 is received by the hub shaft 25 so as to rotate via the bearing member 71.

The bearing member 71 fit into the bearing retaining recess 54 of the support frame 50 reduces a width W of the hub body 26 in the direction of the axis 28, thereby reducing the size and weight of an electric hub device 20.

In the foregoing embodiments, as illustrated in FIGS. 4 and 10, the planetary gear 48 includes the gear body 48a and the spindle 48b inserted into the gear body 48a. The gear body 48a and the spindle 48b may be combined into the planetary gear 48.

In the foregoing embodiments, the electric bicycle 1 includes the external derailleur 5 as illustrated in FIG. 1. The electric bicycle 1 may not include the external derailleur 5. The electric hub device 20 is provided on the rear wheel 4 but may be provided on the front wheel 3 instead of the rear wheel 4.

## Claims

1. An electric hub device comprising: hub shafts (24, 25) for fixation, a hub body (26) rotatable with respect to the hub shafts (24, 25), and a motor (27) for rotating the hub body (26),
wherein the hub shaft (25) is inserted into a through hole (40) formed on the hub body (26) and penetrates the hub body (26) from an exterior of the hub body (26),
the motor (27) is provided in the hub body (26),
the motor (27) includes a rotating shaft (35) that operates with the hub body (26) in an interlocked manner via a deceleration mechanism (45) provided in the hub body (26), the deceleration mechanism (45) includes a sun gear (46) formed on the rotating shaft (35), an annular gear (47) provided in the hub body (26), and rotatable planetary gears (48) engaged with the sun gear (46) and the annular gear (47),
the planetary gear (48) is supported by a support member (50) and another end is supported by a housing body (37) on the motor (27), **characterized in that** the support member (50) includes a recess (54) opposed to the through hole (40) in an axial direction of the hub shaft (25),
the support member (50) includes a bearing member (59, 71) fit into the recess (54) of the support member (50), the bearing member (59, 71) rotatably receiving a fitting (43) of the hub body (26) and
the bearing member (59, 71) is placed between the support member (50) and an inner side of the hub body (26) in a direction of the shaft center of the hub shaft (24, 25).

2. The electric hub device according to claim 1:
wherein the bearing member (71) is fit into the through hole (40) of the hub body (26) and onto the hub shaft (25),

3. The electric hub device according to claim 2, wherein the bearing member (71) is fit into the recess (54) of the support member (50) without being placed out of the recess (54).

4. An electric bicycle comprising the electric hub device according to any one of claims 1 to 3,
the electric hub device being provided on a wheel (3, 4).

## Patentansprüche

1. Elektrische Nabenvorrichtung, die Nabenwellen (24, 25) für eine Fixierung, einen Nabenkörper (26), der sich in Bezug auf die Nabenwellen (24, 25) drehen kann, und einen Motor (27) zum Drehen des Nabenkörpers (26) umfasst, wobei:
die Nabenwelle (25) in ein an dem Nabenkörper (26) ausgebildetes Durchgangsloch (40) eingesteckt ist und sich in den Nabenkörper (26) von außerhalb des Nabenkörpers (26) erstreckt,
der Motor (27) in dem Nabenkörper (26) vorgesehen ist,
der Motor (27) eine Drehwelle (35) umfasst, die mit dem Nabenkörper (26) in einer über einen Entschleunigungsmechanismus (45) in dem Nabenkörper (26) eingreifenden Weise betrieben wird, wobei der Entschleunigungsmechanismus (45) ein Sonnenzahnrad (46), das an der Drehwelle (35) ausgebildet ist, ein Winkelzahnrad (47), das in dem Nabenkörper (26) vorgesehen ist, und drehbare Planetenzahnräder (48), die in das Sonnenzahnrad (46) und das Winkelzahnrad (47) eingreifen, enthält, und
das Planetenzahnrad (48) durch ein Halteglied (50) gehalten wird und ein anderes Ende durch einen Gehäusekörper (37) an dem Motor (27) gehalten wird,
**dadurch gekennzeichnet, dass**:
das Halteglied (50) eine Vertiefung (54) gegenüber dem Durchgangsloch (40) in einer Axialrichtung der Nabenwelle (25) enthält,
das Halteglied (50) ein in die Vertiefung (54) des Halteglieds (50) gepasstes Lagerglied (59, 71) enthält, wobei das Lagerglied (59, 71) drehbar einen Verbindungsteil (43) des Nabenkörpers (26) aufnimmt, und
das Lagerglied (59, 71) zwischen dem Halteglied (50) und einer Innenseite des Nabenkörpers (26) in einer Richtung der Wellenmitte der Nabenwelle (24, 25) platziert ist.

2. Elektrische Nabenvorrichtung nach Anspruch 1, wobei das Lagerglied (71) in das Durchgangsloch (40) des Nabenkörpers (26) und auf die Nabenwelle (25) gepasst ist.

3. Elektrische Nabenvorrichtung nach Anspruch 2, wobei das Lagerglied (71) in die Vertiefung (54) des Halteglieds (50) gepasst ist, ohne außerhalb der Vertiefung (54) platziert zu sein.

4. Elektrofahrrad, das die Nabenvorrichtung gemäß einem der Ansprüche 1 bis 3 umfasst, wobei die Nabenvorrichtung an einem Rad (3, 4) vorgesehen ist.

## Revendications

1. Dispositif formant moyeu électrique comprenant : des arbres de moyeu (24, 25) pour la fixation, un corps de moyeu (26) rotatif par rapport aux arbres de moyeu (24, 25), et un moteur (27) pour faire tourner le corps de moyeu (26),
dans lequel l'arbre de moyeu (25) est inséré dans un trou traversant (40) formé sur le corps de moyeu (26) et pénètre dans le corps de moyeu (26) depuis un extérieur du corps de moyeu (26),
le moteur (27) est prévu dans le corps de moyeu (26),
le moteur (27) inclut un arbre rotatif (35) qui fonctionne avec le corps de moyeu (26) par enclenchement *via* un mécanisme de décélération (45) prévu dans le corps de moyeu (26),
le mécanisme de décélération (45) inclut un engrenage planétaire (46) formé dans l'arbre rotatif (35), un pignon annulaire (47) prévu dans le corps de moyeu (26), et des pignons planétaires rotatifs (48) engagés avec le pignon solaire (46) et le pignon annulaire (47),
le pignon planétaire (48) est supporté par un élément formant support (50) et une autre extrémité est supportée par un corps de logement (37) sur le moteur (27), **caractérisé en ce que**
l'élément formant support (50) inclut un évidement (54) opposé au trou traversant (40) dans un sens axial de l'arbre de moyeu (25),
l'élément formant support (50) inclut un élément formant palier (59, 71) ajusté dans l'évidement (54) de l'élément formant support (50), l'élément formant palier (59, 71) recevant de manière rotative un raccord (43) du corps de moyeu (26) et
l'élément formant palier (59, 71) est placé entre l'élément formant support (50) et un côté interne du corps de moyeu (26) dans un sens du centre de l'arbre de moyeu (24, 25).

2. Dispositif formant moyeu électrique selon la revendication 1 :
dans lequel l'élément formant palier (71) est ajusté dans le trou traversant (40) du corps de moyeu (26) et sur l'arbre de moyeu (25).

3. Dispositif formant moyeu électrique selon la revendication 2, dans lequel l'élément formant palier (71) est ajusté dans l'évidement (54) de l'élément formant support (50) sans être placé hors de l'évidement (54).

4. Bicyclette électrique comprenant le dispositif formant moyeu électrique selon l'une quelconque des revendications 1 à 3,
le dispositif formant moyeu électrique étant prévu sur une roue (3, 4).
